Europäisches Patentamt

European Patent Office

Office européen des brevets

(11) Publication number: **0 136 717**
A2

# (12) EUROPEAN PATENT APPLICATION

(21) Application number: **84111899.5**

(22) Date of filing: **04.10.84**

(51) Int. Cl.⁴: **C 08 F 261/04**
//(C08F261/04, 218:08, 210:02)

(30) Priority: **06.10.83 US 539763**

(43) Date of publication of application:
**10.04.85 Bulletin 85/15**

(84) Designated Contracting States:
**DE FR GB**

(71) Applicant: AIR PRODUCTS AND CHEMICALS, INC.
Route no. 222
Trexlertown Pennsylvania 18087(US)

(72) Inventor: Daniels, Wiley E.
3760 Baldwin Drive
Easton, PA 18042(US)

(74) Representative: Sandmair, Kurt, Dr. Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) Polyvinyl alcohol-vinyl acetate-ethylene interpolymers having oxygen barrier properties.

(57) A polyvinyl alcohol/vinyl acetate-ethylene interpolymer is described which demonstrates good oxygen barrier properties as a dried latex film. The interpolymer contains about 1-40 wt% ethylene and is prepared by the aqueous emulsion polymerization of vinyl acetate and ethylene in the presence of at least about 15 wt% polyvinyl alcohol, preferably greater than about 20 wt%, based on polyvinyl alcohol and vinyl acetate, which polyvinyl alcohol is substantially incorporated into the interpolymer. Packaging materials for oxygen sensitive substances such as bottles, containers, sheets, thin films and the like are characterized by an oxygen permeability of less than 0.4 cc/100 in²/24 hr/cm Hg/mil at 25°C and 0% relative humidity.

EP 0 136 717 A2

# POLYVINYL ALCOHOL-VINYL ACETATE-ETHYLENE INTERPOLYMERS HAVING OXYGEN BARRIER PROPERTIES

## TECHNICAL FIELD

The invention relates to vinyl acetate-ethylene copolymers. More particularly, the invention relates to films and coatings deposited from vinyl acetate-ethylene copolymer latexes and having improved oxygen barrier properties and to packaging materials prepared using such copolymers.

## BACKGROUND OF THE INVENTION

Numerous synthetic polymers are currently available for use in the preparation of packaging materials for foodstuffs, medicines and related oxygen sensitive substances. However, most are characterized by one or more serious deficiencies which detract from their packaging utility. Most synthetic polymers with good thermal forming or processing characteristics have a high rate of oxygen permeability and water vapor transmission so that foods and medicines packaged in these materials suffer water gain or loss, oxidation, discoloration, loss of taste and aroma, thereby losing their consumer appeal.

For example, fully hydrolyzed polyvinyl alcohol has very high resistance to oxygen permeability, but has serious deficiencies in that it is water sensitive and has a very high water vapor transmission rate. Furthermore, polyvinyl alcohol polymers fail to retain their excellent resistance to oxygen permeability at conditions of high humidity and, in general, have poor processing characteristics which precludes thermal processing into shaped articles. The poor thermal processability stems from the necessity of heating the resin above its melting point (220-240°C is the crystalline melting point range of polyvinyl alcohol) and under these conditions the resin undergoes thermal decomposition.

Vinyl alcohol-olefin copolymers, especially vinyl alcohol-ethylene copolymers, have good gas barrier properties but lose substantial barrier properties on exposure to high humidities.

U.S. Defensive Publication T877,001 discloses vinyl acetate-ethylene copolymers comprising 65-88 wt% vinyl acetate and 12-35 wt% ethylene in an emulsion composition containing 4-6 wt%, based on polymer weight, of a polyvinyl alcohol protective colloid.

U.S. Re 28,065 discloses an example in which vinyl acetate and ethylene are copolymerized in the presence of 14 wt% polyvinyl alcohol based on vinyl acetate. 60% of the polyvinyl alcohol is present in the initial reaction charge and the remaining 40% is added as a delay feed.

U.S. 2,843,562 discloses graft copolymers prepared by polymerizing a mixture comprising (1) from 15 to 90% vinyl chloride, (2) from 85 to 10% polyvinyl alcohol and (3) from 0.1 to 5%, based on the weight of vinyl chloride, of a crosslinking agent such as divinyl benzene.

U.S. 3,094,500 discloses the aqueous polymerization of vinyl acetate monomer by the emulsion method in the presence of at least 10% of a low molecular weight 70-90% hydrolyzed polyvinyl alcohol. A specific example discloses the use of 180 parts polyvinyl alcohol and 763 parts vinyl acetate monomer in a polymerization recipe. Films cast from such emulsions possessed adhesive properties and very high gloss, or clear, and re-emulsified readily.

U.S. 3,403,137 discloses the preparation of vinyl chloride-ethylene copolymers in which the amount of a protective colloid such as polyvinyl alcohol, whether preor post-added or both, is on the order of 0.01-10 parts by weight based on 100 parts of the combined monomers as originally charged.

U.S. 3,734,819 discloses a vinyl acetate-ethylene emulsion adhesive which contains between about 1 and 5 wt% polyvinyl alcohol.

U.S. 3,883,489 discloses easily dispersible vinyl acetate-ethylene polymer powder. In the preparation of the vinyl acetate-ethylene dispersions, polyvinyl alcohol is used as a protective colloid in an amount ranging from 5 to 20% by weight calculated on the polymer. For the preparation of the polymer powder, 50-90% of the protective colloid used is advantageously contained in the aqueous medium at the beginning of the polymerization and 10-50% is added to the finished dispersion in the form of an aqueous solution.

U.S. 4,141,875 discloses polychloroprene-polyvinyl alcohol latex prepared by polymerizing an aqueous suspension of chloroprene monomer containing about 3-10 parts polyvinyl alcohol based on 100 parts by weight monomer. The monomer so produced contains the polyvinyl alcohol in a form such that it is not completely recoverable by extraction with water.

U.S. 4,118,357 discloses aqueous dispersions of pre-crosslinked grafted polymers of vinyl esters and at least di-olefinically unsaturated monomers grafted onto a partly saponified water-soluble polyvinyl alcohol which is contained in amounts of 2% to 14% by weight in the polymer mixture. The use of such aqueous copolymer dispersions in admixture with acid water soluble hardner additives give adhesives of increased waterproofness.

U.S. 4,133,791 discloses a process for the preparation of an aqueous ethylene-containing copolymer dispersion which consists essentially of (1) polymerizing an aqueous monomer mixture of ethylene and at least one monomer copolymerizable with ethylene under conventional ethylene copolymerization conditions in the presence of from 1% to 15% by weight of 70 to 100% hydrolyzed polyvinyl alcohol and adding from 1% to 8% by weight of water soluble polyalkylene glycols to the copolymer dispersions. The resultant dispersions form flexible films with improved tear resistance and very high fatigue limit under static load.

U.S. 4,189,415 discloses dispersions containing a copolymer comprising 50 to 85 wt% vinyl chloride units, 5 to 35 wt% vinyl acetate units and 5 to 30 wt% ethylene units and, as protective colloid, 2 to 15 wt%, based on the dispersion weight, of one or more polyvinyl alcohols. The vinyl chloride copolymer dispersions can be used as binders in hydraulically setting building materials and adhesives in combination with acidic hardners.

Japanese Patent 70-37579 describes the production of polyvinyl alcohol synthetic fiber. Vinyl acetate is emulsion polymerized in the presence of polyvinyl alcohol at a weight ratio of vinyl acetate:polyvinyl alcohol of 50:50 to 3:97.

Okamura, et al., Klbunshi Kugaku 15, No. 155, 165-169 (1958) disclose the formation of polyvinyl alcohol-vinyl acetate graft copolymers using from 0 to 16 g of completely hydrolyzed polyvinyl alcohol and 20 g vinyl acetate monomer. At pages 170-174 they describe graft copolymers of vinyl acetate on partially hydrolyzed polyvinyl alcohol. Described are a series of experiments in which 10 g of vinyl acetate

- 5 -  A136717

monomer are graft polymerized onto 5 g of a number of polyvinyl alcohols having degrees of hydrolysis varying from 88 to 100%.

## SUMMARY OF THE INVENTION

The present invention provides an interpolymer which demonstrates good oxygen barrier properties as a dried latex film. The interpolymer is a polyvinyl alcohol-vinyl acetateethylene interpolymer which contains about 1-40 wt% ethylene and is prepared by the aqueous emulsion polymerization of vinyl acetate and ethylene monomers in the presence of at least about 15 wt% polyvinyl alcohol, based on polyvinyl alcohol and the vinyl monomer, which polyvinyl alcohol is substantially incorporated into the interpolymer.

As another embodiment of the invention, there is provided an interpolymer dispersion comprising an interpolymer of polyvinyl alcohol, vinyl acetate, ethylene and, optionally, at least one other mono-olefinically unsaturated monomer colloidally suspended in water. The interpolymer contains about 1-40 wt% ethylene and is prepared by polymerization of vinyl acetate, ethylene and 0-10 wt% of at least one other olefinically unsaturated monomer as an aqueous dispersion in the presence of at least about 15 wt% polyvinyl alcohol, based on polyvinyl alcohol and vinyl acetate monomer, which polyvinyl alcohol is substantially incorporated into the interpolymer.

The invention provides a synthetic polyvinyl alcohol interpolymer which possesses the good oxygen impermeability properties of vinyl alcohol homopolymer over a wide range of humidity conditions.

As a further advantage, the interpolymers show good adhesion to substrates such as metals, glass, and certain plastics.

In addition, since the quantity of polyvinyl alcohol used in the preparation of the interpolymer provides the interpolymer with a relatively high hydroxyl content, various reagents can be used to crosslink the interpolymers to yield films of much improved water and solvent resistance.

As a result of the interpolymers possessing good oxygen barrier properties, another embodiment of the invention provides packaging materials, such as bottles, containers, sheets, thin films and the like, for foods, medicines and other oxygen sensitive substances. The packaging material comprises a polyvinyl alcohol-vinyl acetate-ethylene interpolymer of the invention and is characterized by an oxygen permeability of less than 0.4 cc/100 sq in/24 hr/cm Hg/mil, preferably less than 0.1, at 25°C and 0% relative humidity. Where the packaging materials comprises a polyvinyl alcohol-vinyl acetate-ethylene interpolymer prepared in the presence of greater than 20 wt% polyvinyl alcohol, the oxygen permeability is less than 0.05 cc/100 sq in/24 hr/cm Hg/mil at 25°C and 0% relative humidity.

## DETAILED DESCRIPTION OF THE INVENTION

Interpolymer latexes are provided which can deposit an interpolymer coating, film or barrier which possesses good oxygen impermeability and good adhesion to various substrates. The interpolymer comprises polyvinyl alcohol, vinyl acetate units and ethylene units, the interpolymer being prepared by the emulsion polymerization of the vinyl acetate and ethylene monomers in the presence of at least about 15 wt%, preferably greater than about 20 wt%, polyvinyl alcohol, based on polyvinyl alcohol and vinyl acetate. The ethylene content of the interpolymer is

- 7 -                    1136717

about 1-40 wt%, preferably about 10-30 wt%.  It is necessary to have ethylene as a component of the interpolymer because the flexibility and thermal stability of polyvinyl acetate interpolymer films are poor and as an internal plasticizer to reduce fusion temperature.

The polyvinyl alcohol which is used as the protective colloid, or latex stabilizing agent, can have any degree of hydrolysis ranging from 50 to 99%, but it is preferred to use 80-99% hydrolyzed polyvinyl alcohols.  The degree of polymerization can range from 50 to about 3,000 with a 100 to 2,000 range preferred.  The amount of polyvinyl alcohol which is present in the aqueous emulsion medium during the polymerization of the vinyl acetate and ethylene should be at least about 15 wt% based on polyvinyl alcohol and vinyl acetate.  While interpolymers of vinyl acetate and ethylene prepared in the presence of about 15 wt% polyvinyl alcohol show improved oxygen barrier properties over such polymers prepared in the presence of less polyvinyl alcohol, the use of greater than about 20 wt%, especially about 25 wt% or more, polyvinyl alcohol results in a dramatic improvement in the oxygen impermeability of the resulting interpolymer films, coatings and structural articles.  The preferred range of polyvinyl alcohol as the protective colloid in the polymerization recipe is from 25 to 95 wt%, the higher levels showing extraordinary oxygen barrier properties.

It has been observed that the polyvinyl alcohol is substantially incorporated into the interpolymer in some manner and that upon completion of the polymerization reaction relatively minor amounts of polyvinyl alcohol, if any at all, can be detected in the aqueous phase of the emulsion.  Without being held to any specific theory, it is believed that the properties of the interpolymers of the invention derive from grafting reactions which are known to take place between polyvinyl alcohol and vinyl acetate during emulsion polymerization.

It is contemplated that other ethylenically-unsaturated monomers which can be copolymerized with the vinyl acetate and ethylene monomers can be present in amounts up to 10 wt% in the interpolymer. As examples of such ethylenically-unsaturated copolymerizable monomers are alkenoic acids having 3 to 10 carbon atoms, such as acrylic acid, methacrylic acid, crotonic acid, or isocrotonic acid and their esters with $C_1-C_{18}$ alkanols such as methanol, ethanol, propanol and butanols; $C_3-C_6$ alkenes like propylene and butylene; vinyl halides such as vinyl chloride; alpha,beta-unsaturated $C_4-C_{10}$ alkendioic acids such as maleic, fumaric acid and itaconic acid and their monoesters and diesters of $C_1-C_{12}$ alkanols; and nitrogen-containing monoolefinically unsaturated monomers, particularly amides, N-methylol amides and their lower alkyl ethers, such as acrylamide, methacrylamide, N-methylol acrylamide, N-methylol methacrylamide, and their lower alkyl ethers. When such copolymerizable monomers are incorporated into the interpolymer it is preferably done at about a 3 to 6 wt% level.

Suitable polyvinyl alcohol/vinyl acetate/ethylene interpolymer latexes of the invention can be prepared by the following process.

Vinyl acetate and ethylene are copolymerized in the presence of polyvinyl alcohol in an aqueous medium under pressures not exceeding 100 atm and in the presence of a catalyst which is added incrementally, the aqueous system being maintained by a suitable buffering agent at a pH of 2 to 6. The process is a batch process which involves first a homogenization in which the vinyl acetate suspended in water is
thoroughly agitated in the presence of ethylene under
the working pressure to effect solution of the
ethylene in the vinyl acetate while the reaction
medium is gradually heated to polymerization
temperature.  The homogenization period is followed by
a polymerization period during which the catalyst,
which consists of a main catalyst, or initiator, and
may include an activator, is added incrementally.  All
the polyvinyl alcohol may be present in the aqueous
medium prior to charging the vinyl acetate and
ethylene or a portion may be present initially with
the remainder being added incrementally during the
polymerization reaction.  Because it is important that
substantially all the polyvinyl alcohol be
incorporated into the interpolymer, the post-addition
of polyvinyl alcohol to attain the required 15 wt%,
preferably greater than 20 wt%, is outside the
invention.  It is preferred that all the polyvinyl
alcohol be present in the medium prior to initiation
of the polymerization.

The monoolefinically unsaturated copolymerizable
monomer may also be added all at once or incrementally
over the course of the reaction.

Various free-radical forming catalysts can be
used in carrying out the polymerization of the
monomers, such as peroxide compounds.  Combination
type catalysts employing both reducing agents and
oxidizing agents can also be used, i.e. a redox
system.  The reducing agent is often referred to as an
activator and the oxidizing agent as an initiator.
Suitable reducing agents or activators include
bisulfites, sulfoxylates, or other compounds having
reducing properties such as ferrous salts, and
tertiary aromatic amines, e.g. N,N-dimethylaniline.
The oxidizing agents include hydrogen peroxide, organic peroxides such as benzoyl peroxide, t-butyl hydroperoxide and the like, persulfates, such as ammonium or potassium persulfate, perborates and the like. Specific combination type catalysts or redox systems which can be used include hydrogen peroxide and zinc formaldehyde sulfoxylate; hydrogen peroxide, ammonium persulfate or potassium persulfate with sodium metabisulfite, sodium bisulfite, ferrous sulfate, dimethylaniline, zinc formaldehyde sulfoxylate or sodium formaldehyde sulfoxylate. It is preferred to use hydrogen peroxide/sodium formaldehyde sulfoxylate. Other types of catalysts or redox systems that are well known in the art can also be used to polymerize the monomers.

The catalyst is employed in an amount of 0.1 to 2%, preferably 0.25 to 0.75%, based on the weight of the vinyl acetate introduced into the system. The activator is ordinarily added in aqueous solution and the amount of activator is generally 0.25 to 2 times the amount of catalyst.

While not necessary, nonionic emulsifying agents may be added along with the polyvinyl alcohol. Suitable nonionic emulsifying agents include polyoxyethylene condensates.

If it is desired to maintain the pH of the system at a desired value, there may suitably be added a buffering agent of any convenient type which is compatible with the stabilizing agent. The amount of buffer is generally about 0.1 to 0.5 wt% based on the monomers.

Latexes of 45 to 50% solids content with viscosities of 3,000 to 4,000 cps can be prepared using 15 to 20% polyvinyl alcohol provided sufficient energy is supplied by means of agitation speed. At insufficient agitation speed reaction mixtures of unstirrable viscosity and uncontrollable heat transfer are obtained. Copolymer latexes containing greater than 25% polyvinyl alcohol can also be successfully prepared using sufficient agitation, but in these cases total solids content are usually in the range of 20 to 30%. The latexes can, of course, be easily thinned by the addition of water to lower solids contents of any desired value.

The reaction temperature can be controlled by the rate of catalyst addition and by the rate of the heat dissipation. Generally, it has been found that it is advantageous to maintain a mean temperature of about 50°C during the polymerization of the monomers and to avoid temperatures much in excess of 80°C. Although temperatures as low as 0° can be used, economically the lower temperature limit is about 30°C.

The reaction time will also vary depending upon other variables such as the temperature, the catalyst, and the desired extent of the polymerization. It is generally desirable to continue the reaction until less than 0.5% of the vinyl acetate remains unreacted.

In carrying out the polymerization, an amount of the vinyl acetate is initially charged to the polymerization vessel and saturated with ethylene. Most advantageously, at least about 10% of the total vinyl acetate to be polymerized is initially charged, preferably at least about 20%, and the remainder of the vinyl acetate is incrementally added during the course of the polymerization. The charging of all of the vinyl acetate initially is also contemplated with no additional incremental supply. When reference is made to incremental addition, substantially uniform additions, both with respect to quantity and time, are contemplated. Such additions are also referred to as "delay" additions.

0136717

The quantity of ethylene entering into the interpolymer is influenced by the pressure, the agitation, and the viscosity of the polymerization medium. Thus, to increase the ethylene content of the copolymer, higher pressures, greater agitation and a low viscosity are employed.

The process of forming the polyvinyl alcohol/vinyl acetate/ethylene interpolymer latexes generally comprises the preparation of an aqueous solution containing at least some of the polyvinyl alcohol. This aqueous solution and the initial charge of vinyl acetate are added to the polymerization vessel and ethylene pressure is applied to the desired value. As previously mentioned, the mixture is thoroughly agitated to dissolve ethylene in the vinyl acetate and in the water phase. Conveniently, the charge is brought to polymerization temperature during this agitation period. The polymerization is then initiated by introducing initial amounts of the catalyst and of the activator when used. After polymerization has started, the catalyst and the activator are incrementally added as required to continue polymerization, and the remaining vinyl acetate, if any, is similarly added.

Another method for producing vinyl acetate-ethylenecontaining copolymers which is preferred for preparing the copolymer emulsions of this invention comprises first forming an aqueous emulsion of vinyl acetate and stabilizer and charging this emulsion to a reactor. The reactor is pressurized with ethylene to an ethyleneequilibrium pressure of about 200 to 500 psig. The resulting reaction mixture is adjusted to a temperature from about 10 to 30°C. Polymerization is initiated by the addition of a catalyst at a rate such that the reaction mixture is brought to a temperature of from 45 to 85°C, preferably 50 to 60°C, within a period of one hour or less, preferably 30 minutes. The polymerization is continued until the vinyl acetate content is reduced below about 0.7 wt% of the copolymers.

The crosslinking monomer can be added can be added to the reaction vessel with the initial charge or as a delay or a combination of the two.

This letter polymerization process is the subject of U.S. Patent 4,332,850 which is incorporated by reference.

Since the emulsion interpolymers of the invention exhibit good oxygen barrier properties, a preferred utility is as films and shaped objects as packaging for food and drug applications.

The packaging films prepared from such interpolymers may be made by extrusion, pressing, calendering, casting and by other methods as are well known to those skilled in the art. Although the examples hereinafter demonstrate the surprising oxygen barrier properties of cast films from interpolymer latexes, it is contemplated that extruded and thermopressed films would show these extraordinary properties if properly extruded, oriented and thermally treated.

Bottles and containers may be made by any of the conventional methods such as blow extrusion, injection molding, vacuum forming, casting, and the like.

In addition, the interpolymers of the invention may be applied as a barrier coating onto paper, corrugated board, laminated paper products, polymer films and other related materials that are used in the packaging industry. These barrier coatings may be applied to the various substrates by any of the known methods, for example roll coating, spraying and doctor blade applications.

0136717

Also contemplated is the use of conventional additives such as dyes, fillers, pigments, plasticizers, stabilizers and the like in the packaging materials of this invention.

A packaging material for foods, medicines and other related oxygen sensitive substances prepared from the emulsion interpolymer of the invention is characterized by an oxygen permeability of less than 0.4 cc/100 sq in/24 hr/cm Hg/mil at 25°C and 0% relative humidity. If the interpolymer is prepared by polymerizing vinyl acetate and ethylene in the presence of greater than about 20% polyvinyl alcohol, based on polyvinyl alcohol and vinyl acetate monomer, the oxygen permeability of the packaging material is advantageously less than 0.05 cc/100 sq in/24 hr/cm Hg/mil at 25°C and 0% relative humidity.

## EXAMPLE 1

This example illustrates the preparation of vinyl acetate/ethylene copolymer latexes stabilized by about 5 wt% polyvinyl alcohol, based on polyvinyl alcohol and vinyl acetate, following the teaching of U.S. 3,708,388.

The following ingredients were charged to a 1 gallon stainless steel pressure reactor equipped with temperature control and agitation:

| | |
|---|---|
| 744 g | Vinol® 205[a] polyvinyl alcohol (6%) |
| 401 g | Vinol® 523[b] polyvinyl alcohol (6%) |
| 201 g | Water |
| 0.05 g | Ferrous Ammonium Sulfate |
| 4.5 g | Acetic acid |

[a] a 87 to 89 mole % hydrolyzed PVOH marketed by Air Products and Chemicals, Inc.

[b] a 87 to 89 mole % hydrolyzed PVOH marketed by Air Products and Chemicals, Inc.

Agitation was begun at 100 rpm and 30 psi nitrogen was added and then vented. This was repeated three times to remove oxygen. Temperature was then raised to 45°C and maintained for 10 minutes. Vinyl acetate (1,430 g) was then charged to the reactor and agitation was increased to 1,100 rpm. The temperature was raised to 55°C and 540 psi ethylene was charged to the reactor. A 10% zinc formaldehyde sulfoxylate solution (10 ml) was added and the reactor was left to equilibrate. Polymerization was begun by adding a 0.4% hydrogen peroxide solution (37.7 ml) and a 10% zinc formaldehyde sulfoxylate solution (129.3 ml) over a 3 hour period. Then 5% hydrogen peroxide solution (32.1 ml) and 10% zinc formaldehyde sulfoxylate solution (37 ml) were added over a 45 minute period. A vinyl acetate/ethylene copolyer latex was obtained with the following properties: 51.8% solids, pH 2.49 and a Brookfield viscosity of 1,400 cps.


                              EXAMPLE 2

This example illustrates the preparation of a vinyl acetate/ethylene copolymer latex containing about 10% polyvinyl alcohol, based on polyvinyl alcohol and vinyl acetate.

Vinol 205 polyvinyl alcohol (150 g) was added to water (1,500 g), stirred at 500 rpm and heated to 90° for one hour to completely dissolve the polyvinyl alcohol. This solution was then cooled to 30°C and charged to a one gallon stainless steel pressure reactor equipped with temperature control and agitator. The atmosphere in the reactor was evacuated and a subsurface nitrogen purge was applied to remove all oxygen.

Vinyl acetate (1,350 g) and a 10% sodium formaldehyde sulfoxylate solution (10 g) were charged to the reactor and agitated at 250 rpm for 10 minutes to emulsify the reactants.

Ethylene pressure (100 psi) was then charged to the reactor and agitation increased to 900 rpm. It was necessary to continue to add ethylene periodicially over a 10 minute period until equilibrium between the ethylene vapor and the ethylene dissolved in solution was reacted as indicated by no further drop in interial pressure.

The charge was then heated to 55°C at which time the internal pressure was adjusted to 900 psi with additional ethylene. Polymerization was commenced by adding a 0.4 hydrogen peroxide solution (110 ml) along with a 10% sodium formaldehyde sulfoxylate solution (26.4 ml) over a 2£ hour period. This was followed by the addition of a 1% hydrogen peroxide solution (70 ml) and a 10% sodium formaldehyde sulfoxylate solution (3.8 ml) over a 2 hour 45 minute period at which time a batch of hydrogen peroxide (1.774 g) and sodium formaldehyde sulfoxylate (4.56 g) was added.

A polyvinyl alcohol/vinyl acetate/ethylene copolymer latex was obtained with the following properties:

540 cps Brookfield viscosity, 60 rpm, Spindle No. 1
48.3% solids
4.3 pH
61.2% insoluble in toluene
0.27 intrinsic viscosity (dimethyl sulfoxide, 30°C)

### EXAMPLE 3

This example demonstrates the preparation of a vinyl acetate/ethylene copolymer latexes containing polyvinyl alcohol in amounts of 15 wt% and greater, based on polyvinyl alcohol and vinyl acetate. The procedure of Example 2 was followed but the ratio of polyvinyl alcohol to vinyl acetate was varied in Runs 3-7. The data relating to the ingredients and the product results are set forth in Table 1.

TABLE 1

| RUN | g H$_2$O | g PVOH | g VAc | g H$_2$O$_2$ | g SFS | Latex Solids | Latex Visc. #, rpm | Polymer Tg (°C) | Polymer I.V. (DMSO) |
|---|---|---|---|---|---|---|---|---|---|
| 3 | 2,100 | 810 (90%) | 90 | 0.3206 | 0.8496 | 27.6% | 7,820 cps #4 spindle, 60 rpm | +38 | 0.68 |
| 4 | 2,100 | 675 (75%) | 225 | 0.3296 | 3.334 | 29.7% | 7,890 cps #4 spindle, 60 rpm | -15 | 0.61 |
| 5 | 1,600 | 650 (46%) | 750 | 2.1449 | 7.172 | 44.0% | 12,580 cps #4 spindle, 60 rpm | -16 | 0.37 |
| 6 | 1,274 | 378 (25%) | 1134 | 2.736 | 8.62 | 48.4 | 3,790 cps | -19 | 0.16 |
| 7 | ----- | 239 (15%) | 1352 | ----- | ---- | 53.5 | 4,540 cps | ----- | ---- |

EXAMPLE 4

This example shows the differences in adhesive qualities of the latexes of Runs 1, 2 and 6.

The latex products were spread out in a thin film (10 mils) on a stainless steel sheet with an appropriately gapped draw-down bar and allowed to air dry for about 3 days at room temperature. The dried films were then tested qualitatively for adhesive properties. The product of Run 1 could be peeled off the stainless steel plate by hand but offered a modest degree of resistance. The film of Run 2 was removed but offered more resistance to pull, while film of Run 6 could be removed only with great difficulty.

EXAMPLE 5

This example illustrates that the polyvinyl alcohol in the polymerization recipe is substantially incorporated into the interpolymer.

The latex of Run 6 (25 wt% polyvinyl alcohol, based on vinyl acetate and polyvinyl alcohol) was prepared on a larger scale in a 15 gallon reactor. The properties were: 47.5% solids, pH 4.9 and Brookfield viscosity of 4,850 cps. The product was spray dried to yield a fine white anhydrous powder.

This white powder was roll milled at 250°F until the powder fused into a translucent flexible polymer film. A portion of this film (8.23g) was extracted with hot water in a Soxhlet apparatus for about 72 hrs. The aqueous extract of the film, which should have contained the polyvinyl alcohol, was evaporated to dryness. There was obtained 0.53g of a somewhat rubbery non-crystalline material. Thus material, when examined by Differential Thermal Analysis, was found to have a glass transition temperature of -11°C indicating the product is a water soluble interpolymer of vinyl acetate and ethylene. Polyvinyl alcohol is reported to be a crystalline solid having a glass transition temperature of greater than +80°C.

## EXAMPLE 6

This example illustrates the unexpected improvement in oxygen barrier properties of polyvinyl alcohol/vinyl acetate-ethylene interpolymers of the invention compared to copolymers prepared using less than 15 wt% polyvinyl alcohol.

Films were prepared from polyvinyl alcohol/vinyl acetate-ethylene interpolymers by coating the respective interpolymer latex on a film of Mylar polyester film with a standard doctor bar at a thickness of 2 mils wet. This coating was allowed to dry yielding a dry film of about 1 mil thickness. A second 2 mil wet latex film was then cast on top of the first dry film and allowed to dry. The thickness of the resultant dry latex film was then cast on top of the first dry film and allowed to try. The thickness of the resultant dry coating for each resin is shown in Table 2. This final film was then tested for oxygen permeability in an OX-TRAN 10 instrument sold by Modern Controls Corp. (MO-CON) by standard methods.

Resin A was a commercially available vinyl acetateethylene resin emulsion prepared using polyvinyl alcohol as the protective colloid marketed as Airflex® 400 by Air Products and Chemicals, Inc. Resin Blend E was Airflex 400 emulsion blended with sufficient polyvinyl alcohol to approximate the overall composition of Resin E. EVAL F film is a 50/50 mole % (80/20 wt%) vinyl alcohol-ethylene copolymer produced by Kuraray Chemical Co.

## TABLE 2

| Resin | Composition PVOH/VAc-ET | Latex Film Thickness (mil) | $O_2$ Permeation (cc $O_2$/mil/100 in$^2$/day/atm) (normalized to 1 mil) | |
|---|---|---|---|---|
| | | | 0% Rel. Humidity | 100% |
| A | 4/96 | 1.5 | 1.77 | 1.46 |
| B | 5/95 | 1.5 | 1.59 | 1.41 |
| C | 10/90 | 1.3 | 0.45 | 1.71 |
| D | 15/85 | 2.0 | 0.034 | 1.96 |
| E | 25/75 | 2.0 | 0.028 | 1.44 |
| Blend E | 25/75 | 1.5 | 0.88 | |
| EVAL F | | 1.0 | 0.07 | 0.60 |

The data in Table 2 shows the surprisingly superior oxygen barrier properties of Resins D and E which contained 15 and 25 wt% polyvinyl alcohol compared to Resins A-C containing less polyvinyl alcohol. Resins D and E demonstrated oxygen permeability of less than 0.1. In addition, Resin Blend E, although comparable to Resin E in composition, demonstrated a far greater oxygen permeability (0.88 and 0.028, respectively) illustrating that the polyvinyl alcohol must be incorporated into the interpolymers of the invention.

## EXAMPLE 7

This example further illustrates the unexpected improvement in oxygen permeability properties of polyvinyl alcohol/vinyl acetate-ethylene copolymers of the invention compared to comparable resin blends of a vinyl acetateethylene copolymer with added polyvinyl alcohol. Aqueous mixtures of the various resins were used to prepare films of 2 ml thickness which were

- 21 -

0136717

coated on a 1 mil polypropylene substrate for oxygen permeation testing as in Example 6.

### TABLE 3

#### $O_2$ PERMEATION

| RESIN | COMPOSITION PVOH:VAc/Et | $O_2$ PERMEATION (cc/100 $in^2$/mil/day) Rel. Humidity: 0% | $90^+$% | Extrudable |
|---|---|---|---|---|
| F | 25:75 | 0.04 | 14 | Yes |
| Blend F | 25:75 | 0.22 | | |
| G | 50:50 | 0.04 | 6.3 | Yes |
| Blend G | 50:50 | 0.13 | | |
| H | 90:10 | 0 | 0.93 | |
| PVOH | PVOH | 0 | 4.4 | |
| (VINOL 205) | | | | |

It can be seen from the date in Table 3 that the resins prepared by polymerizing vinyl acetate and ethylene in the presence of polyvinyl alcohol provided films possessing superior oxygen barrier properties compared to films prepared using blends containing comparable amounts of polyvinyl alcohol simply mixed with a vinyl acetate-ethylene copolymer resin. It is readily apparent from this data that the polyvinyl alcohol which is added to the polymerization recipe initially is somehow incorporated into the resulting interpolyer product.

Surprisingly, the interpolymer according to the invention prepared in the presence of about 90% polyvinyl alcohol showed an oxygen permeability at 0% relative humidity of about 0 like that of polyvinyl alcohol itself. However, its oxygen permeability at $90^+$% relative humidity was less than about 1 in contrast to polyvinyl alcohol which had a value of over 4.

0136717

Resins F and G showed oxygen permeability of less than 0.05 at 0% relative humidity.

### STATEMENT OF INDUSTRIAL APPLICATION

The polyvinyl alcohol/vinyl acetate-ethylene emulsion interpolymers of the invention possess oxygen barrier properties that make them suitable as packaging materials for foods, medicines and other related substances that are oxygen sensitive.

**CLAIMS**

1. An interpolymer comprising polyvinyl alcohol, vinyl acetate and ethylene units, the interpolymer containing 1-40 wt% ethylene and prepared by the aqueous emulsion polymerization of vinyl acetate and ethylene monomers in the presence of at least about 15 wt% polyvinyl alcohol, based on polyvinyl alcohol and vinyl acetate, the polyvinyl alcohol substantially incorporated into the interpolymer.

2. The interpolymer of Claim 1 in which greater than about 20 wt% polyvinyl alcohol is used in the emulsion polymerization.

3. The interpolymer of Claim 2 in which the ethylene content is 10 to 30 wt%.

4. An emulsion comprising the interpolymer of Claim 1 colloidally dispersed in water.

5. An emulsion comprising the interpolymer of Claim 2 colloidally dispersed in water.

6. The interpolymer of Claim 1 in which at least about 25 wt% polyvinyl alcohol is used in the emulsion polymerization.

7. An emulsion comprising the interpolymer of Claim 6 colloidally dispersed in water.

8. An interpolymer comprising polyvinyl alcohol, vinyl acetate, 1 to 40 wt% ethylene and 0 to 10 wt% of at least one other mono-olefinically unsaturated monomer, the interpolymer prepared by the aqueous emulsion polymerization of vinyl acetate monomer, ethylene monomer and mono-olefinically saturated monomer in the presence of at least about 15 wt% polyvinyl alcohol, based on polyvinyl alcohol and vinyl acetate, the polyvinyl alcohol substantially incorporated into the interpolymer.

9. The interpolymer of Claim 8 in which greater than about 20 wt% polyvinyl alcohol is used in the emulsion polymerization.

10.   The interpolymer of Claim 9 in which the ethylene content is 10 to 30 wt%.

11.   An emulsion comprising the interpolymer of Claim 8 colloidally dispersed in water.

12.   An emulsion comprising the interpolymer of Claim 9 colloidally dispersed in water.

13.   The interpolymer of Claim 8 in which at least about 25 wt% polyvinyl alcohol is used in the emulsion polymerization.

14.   An emulsion comprising the interpolymer of Claim 13 colloidally dispersed in water.

15.   A packaging material for oxygen sensitive substances comprising an interpolymer of polyvinyl alcohol, vinyl acetate and ethylene units containing 1-40 wt% ethylene and prepared by the aqueous emulsion polymerization of vinyl acetate and ethylene monomers in the presence of at least about 15 wt% polyvinyl alcohol, based on polyvinyl alcohol and vinyl acetate, the polyvinyl alcohol substantially incorporated into the interpolymer, and the packaging material characterized by an oxygen permeability of less than 0.4 cc/100 in$^2$/24 hr/cm Hg/mil at 25°C and 0% relative humidity.

16.   The packaging material of Claim 15 in which the interpolymer is prepared by emulsion polymerization in the presence of greater than about 20 wt% polyvinyl alcohol.

17.   The packaging material of Claim 16 in which the interpolymer has an ethylene content of 10 to 30 wt%.

18.   The packaging material of Claim 17 in which the polyvinyl alcohol is 80 to 99 mole % hydrolyzed.

19.   The packaging material of Claim 15 in which the interpolymer is prepared by emulsion polymerization in the presence of at least 25 wt% polyvinyl alcohol.

- 25 -

0136717

20. The packaging material of Claim 19 in which the polyvinyl alcohol is 80 to 99 mole % hydrolyzed.

21. The packaging material of Claim 15 in which the interpolymer also contains up to 10 wt% of at least one other olefinically unsaturated monomer.

22. The packaging material of Claim 18 which is characterized by an oxygen permeability of less than 0.05 cc/100 $in^2$/24 hr/cm Hr/mil at 25°C and 0% relative humidity.

23. The packaging material of Claim 15 which is characterized by an oxygen permeability of less than 0.1 cc/100 $in^2$/24 hr/cm Hr/mil at 25°C and 0% relative humidity.

24. The packaging matter of Claim 19 which is characterized by an oxygen permeability of less than 0.05 cc/100 $in^2$/24 hr/cm Hr/mil at 25°C and 0% relative humidity.

<u>0589C</u>
AD-0051C